Europäisches Patentamt

European Patent Office

Office européen des brevets

(11) Veröffentlichungsnummer : **0 069 865**
**B1**

# (12) EUROPÄISCHE PATENTSCHRIFT

(45) Veröffentlichungstag der Patentschrift :
26.03.86

(21) Anmeldenummer : 82105082.0

(22) Anmeldetag : 11.06.82

(51) Int. Cl.⁴ : **G 01 N 29/04**

(54) **Elektrodynamischer Wandlerkopf.**

(30) Priorität : 16.06.81 DE 3123935

(43) Veröffentlichungstag der Anmeldung :
19.01.83 Patentblatt 83/03

(45) Bekanntmachung des Hinweises auf die Patenterteilung : 26.03.86 Patentblatt 86/13

(84) Benannte Vertragsstaaten :
AT BE CH FR IT LI NL SE

(56) Entgegenhaltungen :
EP-A- 0 045 412
DE-A- 2 657 957
GB-A- 1 425 201
GB-A- 2 006 433
US-A- 3 963 980
PATENTS ABSTRACTS OF JAPAN, Band 5, Nr. 202,(P-95)(874), 22. Dezember 1981,

(73) Patentinhaber : **Nukem GmbH**
**Rodenbacher Chaussee 6 Postfach 11 00 80**
**D-6450 Hanau 11 (DE)**

(72) Erfinder : **Hüschelrath, Gerhard, Dr.**
**Am Klingergraben 7**
**D-8752 Laufach-Frohnhofen (DE)**
Erfinder : **Kowol, Ewald**
**Jahnstrasse 24**
**D-6393 Wehrheim (DE)**
Erfinder : **Ruth, Ursula geb. Orthen**
**Gartenstrasse 13**
**D-6451 Ronneburg 1 (DE)**

(74) Vertreter : **Stoffregen, Hans-Herbert, Dr. Dipl.-Phys. et al**
**Patentanwälte Strasse & Stoffregen Salzstrasse 11a**
**Postfach 2144**
**D-6450 Hanau/Main 1 (DE)**

## Beschreibung

Die Erfindung bezieht sich auf einen elektrodynamischen Wandlerkopf zur zerstörungsfreien Werkstoffprüfung mittels Ultraschall, umfassend einen Polschuh, der in bezug auf ein zu überprüfendes elektrisch leitfähiges ferromagnetisches Werkstück ausgerichtet ist und dessen Endabschnitt eine Erreger- und eine Empfängerspule aufweist. Ein solcher Wandlerkopf ist z. B. aus GB-A-2 006 433 bekannt. Auch ist ein solcher Wandlerkopf der EP-A2-0 045 412 (Stand der Technik nach Art. 54(3) (4) EPÜ) zu entnehmen. Der die Erreger- und Empfängerspule aufweisende Polschuh ist dort aus einem Grundkörper und einem Endabschnitt zusammengesetzt, der die Form eines sich in Richtung auf das zu überprüfende Werkstück verjüngenden Kegelstumpfes hat und aus gegeneinander isolierten Blechen aufgebaut ist.

Bei der zerstörungsfreien Werkstoffprüfung mittels Ultraschall haben sich piezoelektrische Schwinger bewährt, wobei die von diesen ausgehenden Ultraschallwellen mittels eines Ankopplungsmediums wie zum Beispiel Wasser in das Werkstück eingeleitet werden. Die Einsatzmöglichkeit solcher piezoelektrischen Schwinger findet jedoch dort eine Grenzen, wo das Ankopplungsmedium zum Beispiel schnellen und großen Temperaturschwankungen unterliegt. Mit Hilfe der elektrodynamischen Schallwandler ist eine berührungslose Werkstoffprüfung mittels Ultraschall möglich, ohne daß hinsichtlich der Meßgenauigkeit im Vergleich zu den Piezo-Schwingern geringere Anforderungen gestellt werden müßten.

Die elektrodynamische Erzeugung von Ultraschall in elektrisch leitfähigen Medien beruht auf der Wechselwirkung von Wirbelströmen mit statischen Magnetfeldern, wodurch eine Teilchenbewegung im Werkstück, also die Ultraschallwellen, erzeugt werden. Dabei wird das erforderliche Magnetfeld vorzugsweise durch einen Elektromagneten über eine gewünschte Polschuhkonfiguration erzeugt. Durch in den Drähten der Erregerspule geführte Hochfrequenz-Ströme werden dann Wirbelströme in dem Werkstück erzeugt, deren Eindringtiefe von der verwendeten Frequenz abhängig ist.

Elektrodynamische Schallwandler sind zum Beispiel in der DE-C-26 21 684 oder der DE-A-29 44 819 beschrieben. Beide Literaturstellen beschäftigen sich mit der speziellen Polschuhkonfiguration, um eine gute Signalauswertung der von der Empfängerspule erfaßten Impulse zu ermöglichen. Die DE-C-26 21 684 schlägt dazu vor, einen Magnetkern eines Elektromagneten derart auszubilden, daß dieser sich zur Werkstückoberfläche hin kontinuierlich verjüngt. Durch diese Ausbildung ist jedoch nicht sichergestellt, daß eine von dem zu überprüfenden Werkstück erfolgte Rückkopplung und die damit bedingte Erzeugung von Wirbelströmen in dem Magnetkern derart unterbunden wird, daß eine Meßsignalauflösung erfolgen kann, die auch die Erfassung kleinster Werkstückfehler ermöglicht. Durch eine spezielle Stoffzusammensetzung des Magnets gemäß DE-A-29 44 819 soll eine entsprechende Wirbelstrombildung im Joch des Elektromagneten verringert werden. Zu diesem Zweck wird vorgeschlagen, den Kern des Elektromagneten zumindest teilweise aus Verbundmaterial herzustellen, welches im wesentlichen aus Eisenpulver und einem elastischen Bindemittel besteht. Durch die Verwendung von Ferriten sind jedoch hinsichtlich der Stärke des Magnetfeldes Grenzen gesetzt. Auch die Herstellung entsprechender Kerne ist recht aufwendig, wobei insbesondere dann, wenn die Kerne nur teilweise aus dem Verbundmaterial hergestellt sind, nicht sichergestellt ist, daß Kerne gleicher Dimensionierung auch zu gleichen Magnetfeldern führen.

Aufgabe der vorliegenden Erfindung ist es, einen elektrodynamischen Wandlerkopf der eingangs genannten Art derart auszubilden, daß die Erzeugung von Ultraschallsignalen in dem Polschuh bedingt durch eine Rückkopplung von dem zu überprüfenden Werkstück und der damit verbundenden Wirbelstrombildung derart unterdrückt wird und daß die der Empfangsspule zu entnehmenden Signale eine einfache Auswertung ermöglichen und eine gute Auflösung zeigen.

Die Aufgabe wird erfindungsgemäß dadurch gelöst, daß der die Spulen aufnehmende Polschuh aus einem Grundkörper und einem Endabschnitt zusammengesetzt ist, der in Bezug auf die Achse des Polschuhs radial verlaufende Schlitze aufweist.

Durch die Ausbildung der Schlitze ist sichergestellt, daß eine Wirbelstrombildung im Polschuh unterbunden wird, so daß die Meßsignale unerwünschten, vom Elektromagneten stammenden Einflüssen nicht ausgesetzt sind. Durch die Ausbildung des Polschuhs in Grundkörper und Endabschnitt, die getrennt hergestellt sein können, ergibt sich des weiteren der Vorteil, daß der Endabschnitt beliebige Formen aufweisen kann, ohne daß der Elektromagnet mit Polschuhen speziell darauf abzielend hergestellt werden muß. Das Anordnen der Schlitze hat des weiteren den Vorteil, daß die dem Werkstück zugewandte Polschuhfläche verkleinert wird, wodurch eine Magnetfeldverstärkung erfolgt, wodurch wiederum die von der Empfangsspule registrierten Impulse eine bessere Signalauswertung ermöglichen.

Nach einer Ausführungsform der Erfindung sind der Grundkörper und der Endabschnitt aus unterschiedlichen Materialien aufgebaut, wobei der Grundkörper vorzugsweise aus Kobalteisen und der Endabschnitt aus St 350 oder St 370 besteht. Die Verwendung von Kobalteisen hat den Vorteil, daß ein größtmöglichstes Magnetfeld in bezug auf die Elektromagneten-Daten zur Verfügung steht, da die höchste verfügbare Sättigungsinduktion erzielt wird. Da der — gleichfalls ferromagnetische — Endabschnitt aus St 350 oder St 370 besteht, ist gleichzeitig sichergestellt, daß ein von dem Kobalteisen stammendes Störrauschen im Bereich der Spulen nicht auftreten kann.

Damit die Gleichmäßigkeit der Flußverteilung durch das Einbringen der Schlitze nicht gestört wird, werden nach einer besonders hervorzuhebenden Ausgestaltung der Erfindung in die Schlitze isolierte Transformatorbleche eingebracht, so daß die Querschnittsfläche des dem Werkstück zugewandten Endabschnitts glatt ist.

Eine Verstärkung des Magnetfelds, also eine Induktionserhöhung in dem dem zu überprüfenden Werkstück zugewandten Endabschnitt kann zusätzlich dadurch erreicht werden, daß eine Verjüngung in Richtung des Werkstücks erfolgt. Vorzugsweise weist der Endabschnitt die Form eines Kegelstumpfes auf.

Nach einer weiteren Ausgestaltung der Erfindung ist der Polschuh ein innerer Polschuh eines Magnetjochs, der konzentrisch von einem im wesentlichen hohlzylinderförmig ausgebildeten äußeren Polschuh umgeben ist, der seinerseits vorzugsweise zwei diametral zueinander angeordnete in Richtung des inneren Polschuhs abgewinkelte Randbereiche umfaßt. Vorzugsweise liegen dabei die äußeren dem Werkstück zugewandten Flächen der Randabschnitte in einer oder in etwa einer Ebene und weisen kreisförmige Ausnehmungen auf, deren Krümmungsmittelpunkte im Bereich des inneren Polschuhs, vorteilhafterweise auf dessen Mittelachse liegen. Mit anderen Worten zeigt das Magnetjoch im Schnitt eine M-Form, dessen äußere Schenkel nach innen abgewinkelt sind.

Durch eine solche Ausgestaltung des Magnetjochs, insbesondere der abgewinkelten Abschnitte wird ein zusätzlicher Vorteil erzielt, der darin besteht, daß der magnetische Widerstand vermindert wird. Dadurch werden die mit dem erfindungsgemäßen elektrodynamischen Wandler ermittelten Messungen weitgehend unabhängig vom aktuellen Wert der relativen Permeabilität des Werkstücks. Das Material der äußeren Schenkel einschließlich deren abgewinkelte Abschnitte können gleichfalls aus St 350 oder St 370 bestehen.

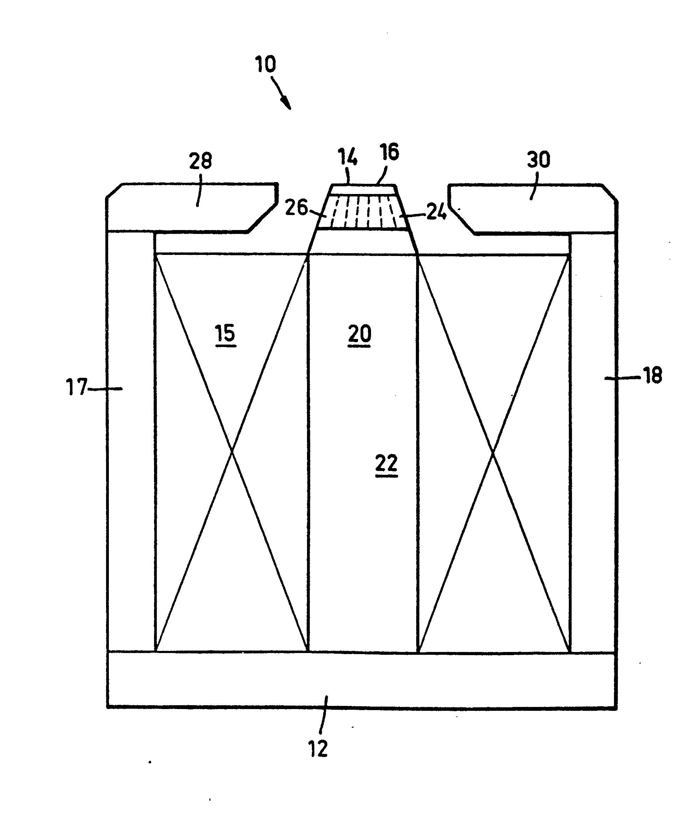

Die Erfindung ist anhand des in der Zeichnung dargestellten bevorzugten Ausführungsbeispiels näher erläutert.

In der einzigen Figur ist in Längsschnitt ein elektrodynamischer Wandlerkopf 10 dargestellt, der im wesentlichen aus einem Elektromagneten 12, einer Erregerspule 14 und einer Empfangsspule 16 besteht. Der Elektr    gnet 12 weist eine Magnetisierungsspule 15 sowie ein im Schnitt M-förmig ausgebildetes Magnetjoch auf. Das Magnetjoch umfaßt einen inneren rotationssymmetrisch ausgebildeten Polschuh 20, der konzentrisch von dem hohlzylinderförmig ausgebildeten äußeren Polschuh umgeben ist, der in der Schnittdarstellung durch die Schenkel 17 und 18 angedeutet ist. Am freien Ende des inneren Polschuhs 20 befindet sich der eigentliche Wandler, der von der Erreger- und Empfangsspule 14 bzw. 16 gebildet wird und der von dem durch Magneten 12 erzeugten magnetischen Fluß senkrecht durchsetzt wird. Die Windungszahlen der Spulen 14 und 16 richten sich nach den elektrischen Erfordernissen, also die Sendespule 14 muß hinsichtlich der Wicklungsanzahl dem Widerstand des Generators angepaßt sein und die Wicklung der Empfangsspule 16 müssen hinsichtlich der Wicklungskapazität der höchsten vorkommenden Frequenz genügen. Der Elektromagnet 12 wird vorzugsweise durch Gleichstrom, durch intermittierenden Gleichstrom oder durch einen Wechselstrom niedriger Frequenz erregt, wodurch unter anderem anfallende Kühlprobleme beseitigt werden können.

Der innere Polschuh 20 ist erfindungsgemäß aus zwei Abschnitten aufgebaut, nämlich einem mit dem äußeren Polschuh in Verbindung stehenden Grundkörper 22 und einem Endabschnitt 24, auf dem die Spulen 14 und 16 aufgebracht sind. Der Grundkörper 22 und der Endabschnitt 24 sind vorzugsweise aus unterschiedlichen Materialien aufgebaut. So kann der Grundkörper 22 aus Kobalteisen und der gleichfalls ferromagnetische Endabschnitt 24 aus St 350 bzw. St 370 bestehen. Die Wahl des Kobalteisens als Material für den Grundkörper 22 zeigt den Vorteil, daß hohe Feldstärken erzeugt werden, ohne daß ein Störrauschen auf die Spulen 14 und 16 übertragen werden kann.

Um das Ausbilden von Wirbelströmen im inneren Polschuh 20 auszuschließen, wodurch in diesem Ultraschallsignale erzeugt werden, was zu einer Herabsetzung der Meßgenauigkeit des elektrodynamischen Wandlerkopfs 10 führen würde, weist der Endbereich 24 radial verlaufende Schlitze 26 auf. In diese können vorzugsweise isolierte Transformatorbleche eingebracht werden, um die freien Flächen des Endbereichs 24 glatt auszubilden, so daß eine gleichmäßige Flußverteilung gewährleistet ist. Vorzugsweise ist der Endbereich 24 in Richtung auf ein nicht dargestelltes Werkstück verjüngt ausgebildet, kann also die Form eines Kegelstumpfes aufweisen, um eine Feldstärkenvergrößerung im Bereich der Spulen 14 und 16 herbeizuführen.

Zur Verringerung des magnetischen Widerstandes weist der äußere Polschuh eine besondere Ausbildung dahingehend auf, daß er diametral einander zugewandte abgewinkelte Randbereiche 28 und 30 aufweist, die in Richtung auf den Endabschnitt 24 ausgerichtet und in einer Ebene liegend verlaufen. Zusätzlich weisen sie kreisförmige Ausnehmungen auf, die konzentrisch den Endabschnitt 24 umgeben, wobei die Krümmungsmittelpunkte der einzelnen Ausnehmungen vorzugsweise auf der Achse des rotationssymetrisch ausgebildeten inneren Polschuhs 20 liegen. Die freien Flächen der abgewinkelten Randbereiche bzw. Abschnitte 28 und 30 liegen des weiteren vorzugsweise in etwa in der Ebene der Spulen 14 und 16. Durch diese Ausbildung des äußeren Polschuhs des Elektromagneten werden die Messungen weitgehend vom aktuellen Wert der relativen Permeabilität unabhängig.

Mit dem erfindungsgemäßen elektrodynamischen Wandlerkopf 10 können ohne Schwierigkeiten Rohre, Stangen, Knüppel, Bleche auf ihre Dicke bzw. Wanddicke hin von ca. 5 mm bis sogar 45 mm geprüft werden. Die Meßgenauigkeit ist vergleichbar mit der eines 2-MHz-Piezoschwingers bei Transversalwellen und beträgt zwischen 10 Mikrometer und 100 Mikrometer je nach Wanddickenmeßbereich und Prüf- und Umweltbedingungen. Sie kann jedoch durch Auswertung von Mehrfachechos noch gesteigert werden.

Die Erzeugung und die Auswertung der von den Spulen ausgesandten und empfangenen Signale sowie die Erzeugung des Magnetfeldes erfolgen mit an und für sich bekannten elektronischen Einheiten, auf die nicht näher eingegangen werden muß. Ergänzend sei erwähnt, daß die Zuführungen zu den Spulen 14 und 16 durch einen in dem inneren Polschuh 22 mittig angeordneten Kanal geführt werden können.

**Patentansprüche**

1. Elektrodynamischer Wandlerkopf (10) zur zerstörungsfreien Werkstoffprüfung mittels Ultraschall, umfassend einen Polschuh (20), der auf ein zu überprüfendes elektrisch leitfähiges ferromagnetisches Werkstück ausgerichtet ist und dessen Endabschnitt (24) eine Erregerspule (14) und eine Empfangsspule (16) aufweist, dadurch gekennzeichnet, daß der die Spulen (14, 16) aufnehmende Polschuh (20) aus einem Grundkörper (22) und einem Endabschnitt (24) zusammengesetzt ist, der in Bezug auf die Achse des Polschuhs (20) radial verlaufende Schlitze (26) aufweist.

2. Wandlerkopf nach Anspruch 1, dadurch gekennzeichnet, daß der Grundkörper (22) und der Endabschnitt (24) aus unterschiedlichen Materialien bestehen.

3. Wandlerkopf nach Anspruch 2, dadurch gekennzeichnet, daß der Grundkörper (22) aus Kobalteisen, der Endabschnitt (24) aus St 350 oder St 370 besteht.

4. Wandlerkopf nach Anspruch 1, dadurch gekennzeichnet, daß in die Schlitze (26) isolierte Transformatorbleche eingebracht sind.

5. Wandlerkopf nach Anspruch 1, dadurch gekennzeichnet, daß sich der Endabschnitt (24) in Richtung des zu überprüfenden Werkstücks verjüngt und vorzugsweise die Form eines Kegelstumpfes aufweist.

6. Wandlerkopf nach Anspruch 1, dadurch gekennzeichnet, daß der Polschuh (20) ein innerer Polschuh eines Magnetjochs ist, der konzentrisch von einem im wesentlichen hohlzylinderförmig ausgebildeten äußeren Polschuh (17, 18) umgeben ist, der zwei diametral zueinander angeordnete, in Richtung des inneren Polschuhs abgewinkelte Randabschnitte (28, 30) umfaßt.

7. Wandlerkopf nach Anspruch 6, dadurch gekennzeichnet, daß die äußeren, dem Werkstück zugewandten Flächen der Randabschnitte (28, 30) in einer oder in etwa einer Ebene liegen und einander zugewandte kreisförmige Ausnehmungen aufweisen, deren Krümmungsmittelpunkte im Bereich des inneren Polschuhs (20) liegen.

8. Wandlerkopf nach Anspruch 6 und/oder Anspruch 7, dadurch gekennzeichnet, daß die Krümmungsmittelpunkte auf der Achse des rotationssymmetrisch ausgebildeten inneren Polschuhs (20) liegen.

**Claims**

1. An electrodynamic transducer head (10) for the non-destructive testing of materials by means of ultrasonics, comprising a pole shoe facing an electro-conductive, ferromagnetic work piece to be tested, and having an exciting coil (14) and a receiving coil (16) on its end section (24), characterized in that the pole shoe (20) holding the coils (14, 16) is composed of a basic body (22) and said end section (24) having radially extending slots (26).

2. An electrodynamic transducer head according to Claim 1, characterized in that said basic body (22) and said end section (24) are made of different materials.

3. An electrodynamic transducer head according to Claim 2, characterized in that said basic body (22) is made of cobalt iron and said end section (24) is made of St 350 or St 370, respectively.

4. An electrodynamic transducer head according to Claim 1, characterized in that insulated transformer sheets are placed in said slots (26).

5. An electrodynamic transducer head according to Claim 1, characterized in that said end section (24) is tapering off in the direction of the work piece to be tested and preferably has the shape of a truncated cone.

6. An electrodynamic transducer head according to Claim 1, characterized in that said pole shoe (20) is an inner pole shoe of a magnet yoke, said inner pole shoe being concentrically surrounded by an outer pole shoe (17, 18) of essentially hollow-cylindrical configuration, said outer pole shoe comprising two edge sections (28, 30) being arranged diametrically to each other and squared off in the direction of said inner pole shoe.

7. An electrodynamic transducer head according to Claim 6, characterized in that the outer surfaces of said edge sections (28, 30) facing the work piece are positioned on the same plane or almost the same plane and are provided with circular recesses facing each other, of which the centers of curvature are within the range of said inner pole shoe (20).

8. An electrodynamic transducer head according to Claim 6 and/or Claim 7, characterized in that said centers of curvature are positioned on the axis of said inner pole shoe (20) of rotational-symmetric configuration.

**Revendications**

1. Tête transformatrice (10) électrodynamique pour l'examen non destructif de matériaux au moyen d'ultrasons, comprenant une pièce polaire (20), qui est posée sur une pièce ferromagnétique conductrice de l'électricité que l'on doit examiner, et dont la section terminale (24) comporte une bobine d'excitation (24), et une bobine de réception (26), tête transformatrice caractérisée en ce que la pièce polaire (20) qui reçoit les bobines (14, 16) est composée d'un corps de base (22) et d'une section terminale (24), qui présente des fentes (26) s'étendant radialement par rapport à l'axe de la pièce polaire (20).

2. Tête transformatrice suivant la revendication 1, caractérisée en ce que le corps de base (22) et la section terminale (24) sont faits de matériaux différents.

3. Tête transformatrice suivant la revendication 2, caractérisée en ce que le corps de base (22) est fait de ferro-cobalt et la section (24) de St 350 ou de St 370.

4. Tête transformatrice suivant la revendication 1, caractérisée en ce que des tôles de transformateur, isolées, sont introduites dans les fentes (26).

5. Tête transformatrice suivant la revendication 1, caractérisée en ce que la section terminale (24) se rétrécit dans la direction de la pièce à examiner et présente avantageusement une forme tronconique.

6. Tête transformatrice suivant la revendication 1, caractérisée en ce que la pièce polaire (20) est une pièce polaire intérieure d'une culasse d'aimant, qui est entourée concentriquement d'une autre pièce polaire (17, 18) extérieure, réalisée essentiellement en forme de cylindre creux, comprenant deux sections marginales (28, 30) disposées diamétralement opposées l'une à l'autre, pliées dans la direction de la pièce polaire intérieure.

7. Tête transformatrice suivant la revendication 6, caractérisée en ce que les surfaces extérieures tournées vers la pièce, des sections marginales (28, 30) se trouvent sur, ou à peu près sur, le même plan et présentant des évidements circulaires tournés les uns vers les autres, dont les centres de courbure se trouvent dans la zone de la pièce polaire (20) intérieure.

8. Tête transformatrice suivant la revendication 6 et/ou la revendication 7, caractérisée en ce que les centres de courbure se trouvent sur l'axe de la pièce polaire (20) intérieure, réalisée avec symétrie de rotation.